# EUROPEAN PATENT APPLICATION

(11) **EP 4 570 955 A1**
(43) Date of publication of application: **18.06.2025**
(21) Application number: 23307184.4
(22) Date of filing: 12.12.2023
(51) Int. Cl.: C25B 1/04, C25B 9/00, C25B 9/19, C25B 9/73, C25B 15/08

(54) **A WATER ELECTROLYZER CELL, RELATED STACK OF WATER ELECTROLYZER CELLS AND PROCESS**

(71) Applicant: TotalEnergies OneTech, 92400 Courbevoie (FR)
(72) Inventor: AYME-PERROT, David, 92400 COURBEVOIE (FR); DUBOUIS, Nicolas, 92400 COURBEVOIE (FR)
(74) Representative: Lavoix

(57) **Abstract**

The cell (26) comprises a cell casing (34) defining an anodic compartment (36) and a cathodic compartment (38), the anodic compartment (36) comprising an anode chamber (50) and the cathodic compartment (38) comprising a cathode chamber (58), the cell casing (34) comprising a membrane (40) separating the anode chamber (50) from the cathode chamber (58).

The anodic compartment (36) defines, within the cell casing (34), an anodic degassing cavity (52) located on top of the anode chamber (50), the cathodic compartment (38) defining, within the cell casing (34), an cathodic degassing cavity (60) located on top of the cathode chamber (58). The cell casing (34) comprises a partition wall (42) tightly separating the anodic degassing cavity (52) from the cathodic degassing cavity (60).

## Description

The present invention concerns a water electrolyzer cell comprising :
- a cell casing defining an anodic compartment and a cathodic compartment, the anodic compartment comprising an anode chamber receiving at least an anode and the cathodic compartment comprising a cathode chamber, receiving at least a cathode, the cell casing comprising a membrane separating the anode chamber from the cathode chamber;
- the cell casing having an anode water inlet tapped in the anode chamber and a produced anodic gas outlet emerging from the anodic compartment above the anode water inlet ;
- the cell casing also having a cathode water inlet tapped in the cathode chamber and a produced cathodic gas outlet emerging from the cathodic compartment above the cathode water inlet.

Electrolyzer cells are incorporated in an electrolyzer of a water electrolysis installation to convert water into dihydrogen and dioxygen using an electrical current. In each cell, dihydrogen is produced at a cathode, separated by a membrane from the anode, where dioxygen is produced. The membrane ensures an ionic conductivity within the cell and prevents gas mixing.

Water electrolysis installations generally comprise electrolyzers having a stack or several stacks gathering several electrolyzer cells, where water splitting takes place to produce dioxygen and dihydrogen. The electrolyzer is coupled with a balance of plant (or "BOP"), which gathers all equipment that allows managing the incoming fluids fed to the electrolyzer cells and also the outgoing liquid and gas products recovered from the electrolyzer cells.

Two different water electrolysis technologies are known. In alkaline water electrolysis, alkaline electrolyser cells comprise electrodes which are generally made of nickel separated by a porous diaphragm. The electrolyte is an aqueous solution of potassium or sodium hydroxide (20-30% weight).

In the proton exchange membrane (or "PEM") water electrolysis, PEM electrolyser cells for example comprise a platinum cathode and an iridium oxide-based anode separated by a proton exchange membrane. The electrolyte is pure water, which prevents parasitic effects.

In a known stack series architecture, the cathode chamber of one electrolyzer cell is positioned adjacent to the anode chamber of the following electrolyzer cell. This creates an alternation between anode chambers and cathode chambers in the stack. The cells are separated by metallic bipolar plates which are electrically conductive and eventually non-porous partition walls.

When water electrolysis takes place in the electrolyzer cells, the produced dihydrogen and dioxygen also drive out of the cell an amount of liquid, typically electrolyte, which makes the products recovered at the top of the electrodes foamy and having the appearance of whipped cream.

These foamy products have to be processed. The dihydrogen and dioxygen outlets are thus connected to gas separators placed in the balance of plant to separate the respective gas and liquids. The recovered liquids are preferably directed to an electrolyte recirculation loop to be reinjected in the electrolyzer cells.

Such water electrolysis installations and electrolyzer cells are thus not entirely satisfactory. Bulky gas/liquid separators must be provided, which increases capital expenditures. Moreover, the large gas/liquid separators require energy to operate and must be maintained, which also increases operational expenditures.

One aim of the invention is thus to obtain electrolyzer cells which help reducing the investment and operational costs of a water electrolysis installation, while still allowing very efficient water electrolysis reactions to be carried out.

To this aim, the subject matter of the invention is a water electrolyzer cell characterized in that the anodic compartment defines, within the cell casing, an anodic degassing cavity located on top of the anode chamber, the produced anodic gas outlet emerging from the anodic degassing cavity, the cathodic compartment defining, within the cell casing, an cathodic degassing cavity located on top of the cathode chamber, the produced cathodic gas outlet emerging from the cathodic degassing cavity, the cell casing comprising a partition wall tightly separating the anodic degassing cavity from the cathodic degassing cavity.

The water electrolyzer cell according to the invention may comprise one or more of the following feature(s), taken alone, or according to any technical feasible combination:
- the volume of the anodic degassing cavity is comprised between 20 % and 90 % of the volume of the anode compartment, the volume of the cathodic degassing cavity being comprised between 20 % and 90 % of the volume of the cathode compartment;
- the membrane separating the anode chamber from the cathode chamber is an ion-exchange membrane, in particular a proton exchange membrane or an anion exchange membrane ;
- the cathode chamber is configured to produce a hydrogen/liquid mixture during water electrolysis, the cathodic degassing cavity being configured to separate hydrogen from the liquid, the or each anode in the anode chamber being configured to produce an oxygen/liquid mixture water electrolysis, the anodic degassing cavity being configured to separate oxygen from the liquid ;
- it comprises a porous separation substrate positioned in the anodic degassing cavity and/or in the cathodic degassing cavity, the porous separation substrate comprising at least a layer of porous particles or/and at least a porous self-supporting structure as a coalesce ;
- the cell casing comprises a porous separating wall separating the anode chamber from the anodic degassing cavity and/or separating the cathode chamber from the cathodic degassing cavity.
- the porous separating wall comprises a porous membrane with a thickness smaller than 500 µm ;
- the porous separating wall comprises a porous plate with a thickness larger than 500 µm, the porous plate having through pores, the through pores of the porous plate being optionally filled with a coalescer, preferably with a mesh pad ;
- it comprises a temperature control system configured to cool or heat the anodic degassing cavity and/or the cathodic degassing cavity ;
- the porous separation substrate positioned in the anodic degassing cavity and/or in the cathodic degassing cavity comprises metal, the temperature control system being configured to heat the porous separation substrate in particular via induction ;
- the cathodic compartment comprises a deoxidizer cavity positioned downstream of the cathodic degassing cavity.

The invention also concerns a stack of water electrolyzer cells comprising a plurality of water electrolyzer cells as defined above wherein the cathodic compartments of two successive water electrolyzer cells are positioned adjacent to one another and the anodic compartments of two successive water electrolyzer cells are positioned adjacent to each other.

The stack of water electrolyzer cells according to the invention may comprise one or more of the following feature(s), taken alone, or according to any technical feasible combination:
- the adjacent cathode chambers of two adjacent cathodic compartments of two successive electrolyzer cells form a single volume containing at least two separate cathodes and/or the adjacent anode chambers of two adjacent anodic compartment of two successive electrolyzer cells form a single volume containing at least two separate anodes ;
- the cathodic degassing cavities of two adjacent cathodic compartments of two successive electrolyzer cells form a single degassing volume and/or the anodic degassing cavities of two adjacent anodic compartment of two successive electrolyzer cells form a single degassing volume ;
- the stack of water electrolyzer cells comprises an electrical connection system configured to electrically connect a power source to each of the cells,
one end anode of an end cell being connected to the positive terminal of the power source and one end cathode of another end cell being connected to the negative terminal of the power source, an anode of each intermediate cell between the end cells being connected to a cathode of an adjacent cell,
or each anode of each cell is connected in parallel to the positive terminal of the power source and each cathode of each cell is connected in parallel to the negative terminal of the power source.

The invention also concerns a water electrolysis process carried out in a stack of water electrolyzer cells as defined above, the process comprising :
- introducing electrolyte in the cathode chamber of each cathodic compartment and the anode chamber of each anodic compartment;
- activating the power source to generate water electrolysis ;
- producing hydrogen by water electrolysis in the cathode chamber of each cathodic compartment resulting in the formation of an unprocessed cathodic outgoing fluid comprising a hydrogen/liquid mixture and producing oxygen by water electrolysis in the anode chamber of each anodic compartment resulting in the formation of an unprocessed anodic outgoing fluid containing an oxygen/liquid mixture ;
- separating the hydrogen and liquid in the cathodic degassing cavity of each cathodic compartment to produce a processed cathodic outgoing fluid and separating the oxygen and liquid in the anodic degassing cavity of each anodic compartment to produce a processed anodic outgoing fluid;
- evacuating the liquids by gravity in the electrode chamber of each anodic compartment and cathodic compartment and evacuating the processed cathodic outgoing fluid and the processed anodic outgoing fluid through the gas outlets outside of each cell casing.

The process according to the invention may comprise the following feature:
- the processed cathodic outgoing fluid separated in the cathodic degassing cavity goes through a deoxidizer cavity positioned in each cathodic compartment to be deoxidized before being evacuated outside of each cell casing.

The invention will be better understood, based on the following description, given solely as a non-limitative example, and made in reference to the amended drawings, in which:
- figure 1 is a schematic representation of a water electrolysis installation according to the invention;
- figure 2 is a schematic view of a first water electrolyzer cell according to the invention;
- figure 3 is a schematic view of a first stack of water electrolyzer cells according to the invention, in which the electrolyzer cells are connected in series to a power source;
- figure 4 is a schematic view of a second stack of water electrolyzer cells according to the invention, in which the electrolyzer cells are connected in parallel to a power source;
- figure 5 is a schematic view of a second water electrolyzer cell according to the invention.

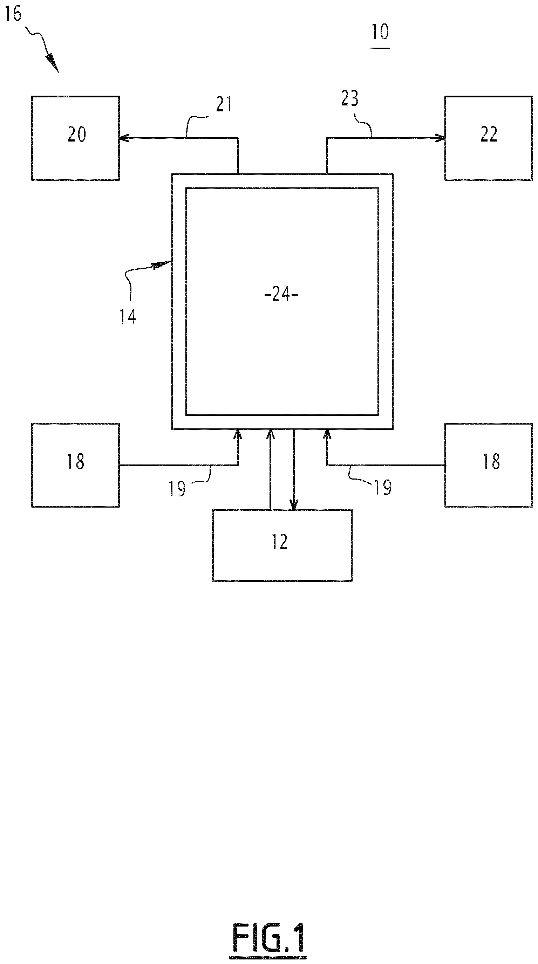

A water electrolysis installation 10 according to the invention is schematically shown in figure 1.

The water electrolysis installation 10 is connected to a power source 12. It comprises at least an electrolyzer 14, the electrolyzer 14 comprising at least one stack 24 of water electrolyzer cells 26, in which water electrolysis takes place and a balance of plant 16 (or "BOP") comprising equipment to feed incoming fluids to the electrolyzer 14 and to recover and process outgoing liquids and gas produced in the electrolyzer 14.

The power source 12 is for example a renewable energy source, such as a solar farm, a wind farm or a tidal farm, or is a battery system, a power grid or any device supplying electrical power. The electrical power provided to the electrolyzer 14 by the power source 12 is for example greater than 0.1 MW and generally comprised between 1 MW and 20 MW.

The balance of plant 16 comprises various fluid handling equipment, including pipes, pumps, thermal exchangers, purification units, reservoirs, tanks or separators.

It comprises at least one electrolyte supply system 18, configured to feed electrolyte 19 from an electrolyte source to the electrolyzer 14, a dihydrogen collecting and processing system 20 and a dioxygen collecting and processing system 22.

In an advantageous embodiment, the electrolyte 19 is pure water.

The dihydrogen collecting and processing system 20 is configured to collect and process a cathodic outgoing fluid 21 of the electrolyzer 14, the cathodic outgoing fluid 21 resulting from water electrolysis and comprising a mixture of dihydrogen and of a water phase.

The dihydrogen collecting and processing system 20 in some instances comprises a first gas/liquid separator configured to separate the mixture of dihydrogen and water phase in a dihydrogen stream and a water phase stream. It also comprises a first water phase recirculation circuit connecting the first gas/liquid separator to the electrolyzer 14 to recycle the water phase stream to the electrolyzer 14, a deoxidizer system to process the dihydrogen stream and a dryer to dry the dihydrogen stream.

Thanks to the construction of the electrolyzer cells 26 which will be described below, the first gas/liquid separator and/or the deoxidizer of the dihydrogen collecting and processing system 20 have a reduced size. In an embodiment, the first gas/liquid separator and/or the deoxidizer are not present at all.

The dioxygen collecting and processing system 22 is configured to collect and process an anodic outgoing fluid 23 of the electrolyzer 14, the anodic outgoing fluid 23 resulting from water electrolysis and comprising a mixture of dioxygen and of a water phase.

The dioxygen collecting and processing system 22 for example comprises a second gas/liquid separator configured to separate the mixture of dioxygen and water phase in a dioxygen stream and in a water phase stream. It also comprises a second water phase recirculation circuit connecting the second gas/liquid separator to the electrolyzer 14 to recycle the water phase stream to the electrolyzer 14.

Thanks to the construction of the electrolyzer cells 26 which will be described below, the second gas/liquid separator has a reduced size. In some embodiments, the second gas/liquid separator is not present at all.

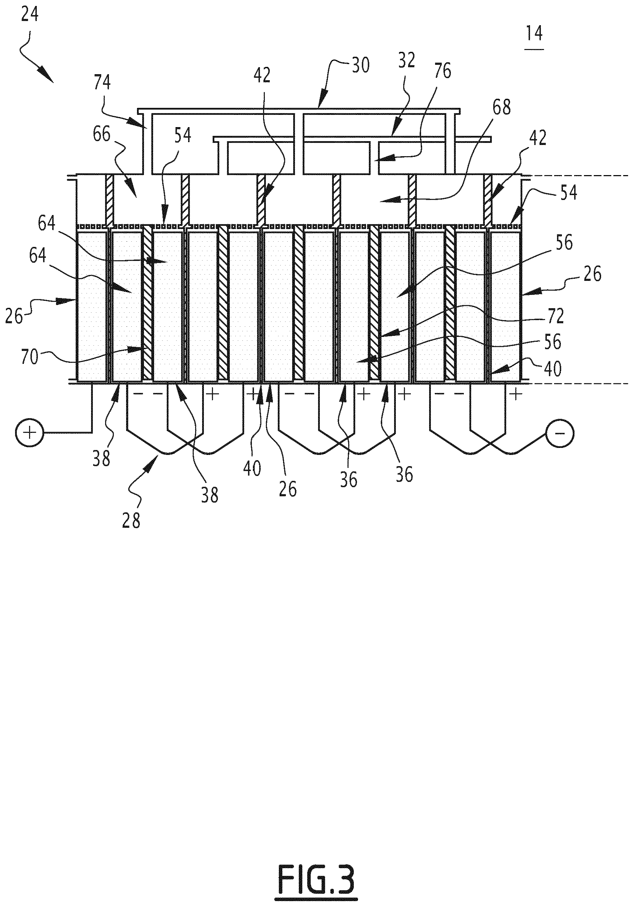

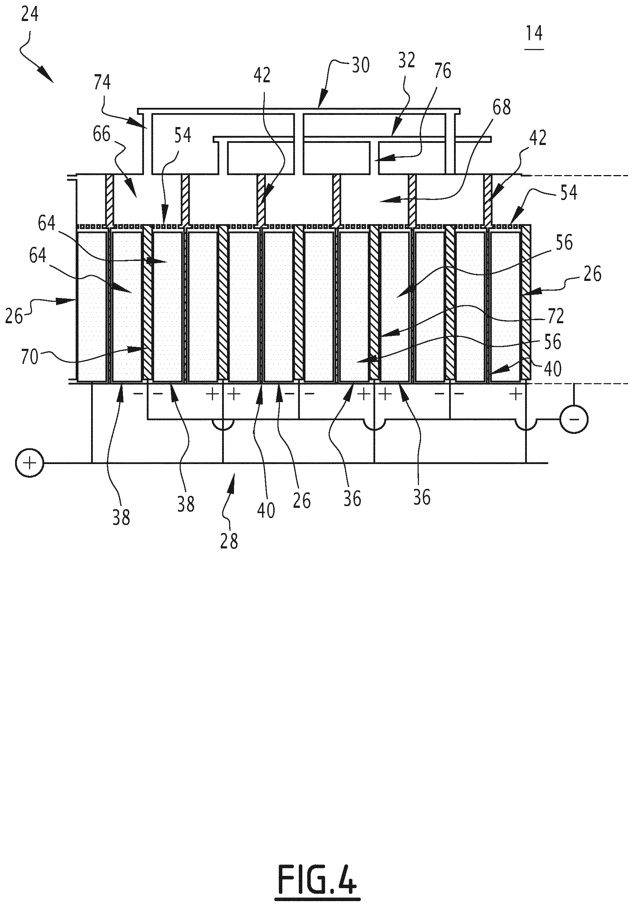

In reference to figure 3 or 4, the electrolyzer 14 comprises at least one stack 24 of water electrolyzer cells 26.

In reference to figures 1 and 3, each stack 24 comprises a plurality of water electrolyzer cells 26, an electrical connection system 28 connecting each cell 26 to the power source 12, a dihydrogen collection and transportation piping 30 connecting the electrolyzer cells 26 to the dihydrogen collecting and processing system 20 and a dioxygen collection and transportation piping 32 connecting the electrolyzer cells 26 to the dioxygen collecting and processing system 22.

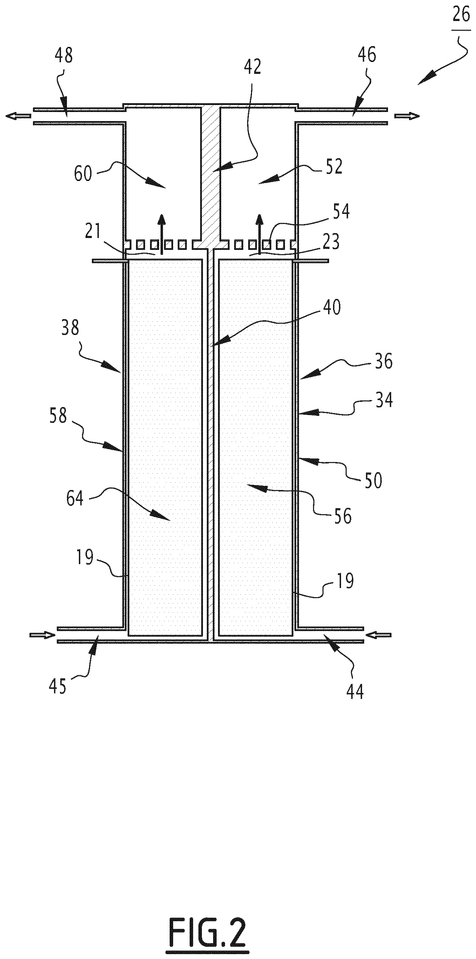

A first example of water electrolyzer cell 26 according to the invention is schematically shown in figure 2.

The water electrolyzer cell 26 comprises a cell casing 34 defining an anodic compartment 36 and a cathodic compartment 38.

The cell casing 34 comprises an ion-exchange membrane 40 and a non-porous partition wall 42 extending upwardly the membrane 40, the membrane 40 and the partition wall 42 vertically separating the anodic compartment 36 from the cathodic compartment 38.

In the example of figure 2, the cell casing 34 also comprises a porous separating wall 54 dividing the anodic compartment 36 and the cathodic compartment 38 at the interface between the membrane 40 and the partition wall 42.

In this example, the porous separating wall 54 extend in a horizontal plane. In a variant, the wall is tilted with regards to a horizontal plane.

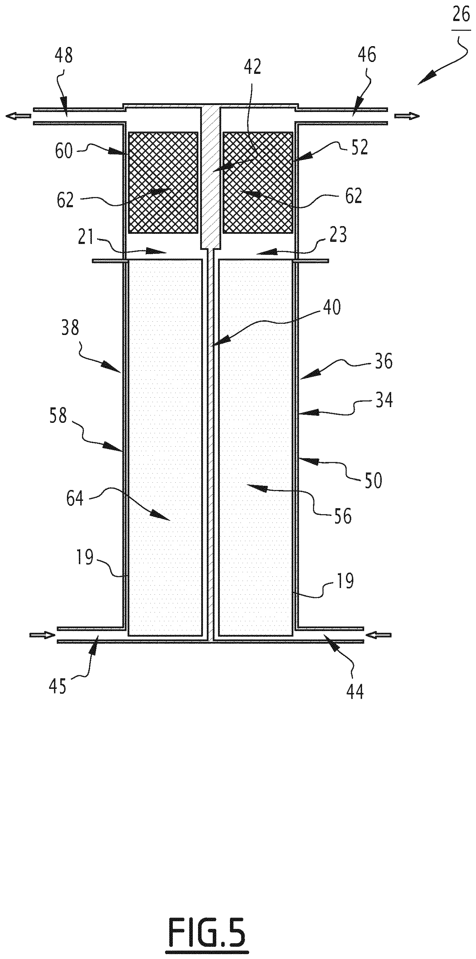

In one embodiment, which will be described below in view of figure 5, the cell casing 34 is without a separating wall 54.

The cell casing 34 also has an anodic compartment water inlet 44, a cathodic compartment water inlet 45, an anodic compartment dioxygen outlet 46 and a cathodic compartment dihydrogen outlet 48. The outlets 46 and 48 are located at the top of the cell casing 34 above the water inlets 44 and 45, which are located at the bottom of the cell casing 34.

The anodic compartment 36 comprises an anode chamber 50 delimited laterally by a first side of the membrane 40, and upwardly by the separating wall 54 and an anodic degassing cavity 52 delimited laterally by a first side of the partition wall 42 and downwardly by the separating wall 54. The anodic degassing cavity 52 is located on top of the anode chamber 50 within the cell casing 34. In the example of figure 2, the anodic degassing cavity 52 is separated from the anode chamber 50 by the porous separating wall 54.

The volume of the anodic degassing cavity 52 is greater than 20 % and generally comprised between 40 % and 90 % of the volume of the anodic compartment 36.

The anode chamber 50 receives at least one anode 56. The anode 56 is a positive electrode where dioxygen is produced by an oxidation of water forming the unprocessed anodic outgoing fluid 23 which comprises a mixture of dioxygen and of a water phase. The anode 56 is immersed in electrolyte 19 fed in the anode chamber 50 from the electrolyte supply system 18 through the anode water inlet 44.

The anode 56 is electrically connected to the power source 12 through the electrical connection system 28.

The anodic degassing cavity 52 is configured to allow dioxygen degassing from the anodic outgoing fluid 23 such that a processed anodic outgoing fluid 23, richer in dioxygen than the unprocessed anodic outgoing fluid 23 is produced. The dioxygen outlet 46 emerges in the anodic degassing cavity 52. It collects and transports the processed anodic outgoing fluid 23 towards the dioxygen collection and transportation piping 32 of the stack 24.

Preferably, the processed anodic outgoing fluid 23 comprises less than 0.5 volume % of liquid. It contains more than 98 volume % dioxygen.

In the example of figure 2, the anodic degassing cavity 52 is hollow.

In one embodiment, which will be described below, the anodic degassing cavity 52 is at least partially filled with at least a porous separation substrate 62 to enhance gas/liquid separation.

The cathodic compartment 38 comprises a cathode chamber 58 delimited by a second side of the membrane 40 opposed to the first side delimiting the anode chamber 50.

It further comprises a cathodic degassing cavity 60 delimited by a second side of the partition wall 42 opposed to the first side delimiting the anodic degassing cavity 52. The cathodic degassing cavity 60 is located on top of the cathode chamber 58 within the cell casing 34. The cathodic degassing cavity 60 is separated from the cathode chamber 58 by the porous separating wall 54.

The volume of the cathodic degassing cavity 60 greater than 20 % and generally comprised between 40 % and 90 % of the volume of the cathodic compartment 38.

The cathode chamber 58 receives at least one cathode 64. The cathode is a negative electrode where dihydrogen is produced by reduction of water forming an unprocessed outgoing cathodic fluid 21 comprising a mixture of dihydrogen and water. The cathode is immersed in the electrolyte 19 fed in the cathode chamber 58 from the electrolyte supply system 18 through the cathode water inlet 45.

The cathode 64 is electrically connected to the power source 12 through the electrical connection system 28.

The cathodic degassing cavity 60 is configured to allow dihydrogen degassing from the unprocessed cathodic outgoing fluid 21 comprising a mixture of dihydrogen and water such that a processed cathodic outgoing fluid 21 is produced which is richer in dihydrogen than the unprocessed cathodic outgoing fluid 21. The dihydrogen outlet 48 emerges in the cathodic degassing cavity 60. It collects and transports the processed cathodic outgoing fluid 21 towards the dihydrogen collection and transportation piping 30 of the stack 24.

Preferably, the processed cathodic outgoing fluid 21 comprises less than 0.1 volume % of liquid. It contains more than 98.0 volume % dihydrogen.

In the example of figure 2, the cathodic degassing cavity 60 is hollow.

In one embodiment, which will be described below the cathodic degassing cavity 60 is at least partially filled with at least a porous separation substrate 62 to enhance gas liquid separation.

The porous separating wall 54 is for example a porous membrane with a thickness advantageously smaller than 500 µm. It is for example made of polyethylene (PE), polypropylene (PP) or polysulfone, fluoropolymer such as polytetrafluoroethylene (PTFE), etc.

Advantageously, one side of the membrane is coated with a hydrophobic layer.

In a variant, the porous separating wall 54 is for example a porous plate. The porous plate has a thickness larger than 500 µm and comprises through pores. The through pores of the porous plate are advantageously filled with a coalescer, in particular a mesh pad.

The ion exchange membrane 40 is a proton exchange membrane or an anion exchange membrane.

The membrane 40 is thin, for example has a thickness smaller than 1 mm and generally comprised between 25 µm and 500 µm. It is an electrical insulator and potentially an ionic conductor.

In particular, in PEM electrolysis cell, the proton exchange membrane comprises a polymer that transports protons. The polymer may be a perfluorosulfonic acid (PFSA) / polytetrafluoroethylene (PTFE) copolymer. In AEM electrolysis cell, the anion exchange membrane comprises a polymer that transports OH⁻. It comprises a polymer backbone having cationic functions.

In alkaline electrolysis cell, the separator generally comprises a porous diaphragm (for example made of polysulfone coupled with a ceramic) where the ionic conductivity is provided by the transport of liquid alkaline metal hydroxide electrolyte, in particular KOH electrolyte, within the porosity.

The partition wall 42 comprises an impervious wall configured to prevent dihydrogen and dioxygen permeation and mixing through the partition wall. Thus, dihydrogen is confined in the cathodic degassing cavity 60, without permeation in the anodic degassing cavity 52, whereas dioxygen is confined in the anodic degassing cavity 52, without permeation in the cathodic degassing cavity 60.

Examples of stacks 24 according to the invention are depicted in figure 3 and figure 4.

The plurality of water electrolyzer cells 26 are arranged so that the cathodic compartments 38 of two successive water electrolyzer cells 26 are positioned adjacent to one another and the anodic compartments 36 of two successive water electrolyzer 26 cells are positioned adjacent to each other.

In this configuration, the adjacent cathode chambers 58 of two adjacent cathodic compartments 38 of two successive cells 26 advantageously form a single volume 70 containing at least two separate cathodes 64. The adjacent anode chambers 50 of two adjacent anodic compartment 36 of two successive cells 26 advantageously form a single volume 72 containing at least two separate anodes 56.

In the same way, the cathodic degassing cavities 60 of two adjacent cathodic compartments 38 of two successive cells 26 advantageously form a single dihydrogen degassing volume 66 and/or the anodic degassing cavities 52 of two adjacent anodic compartment 36 of two successive cells 26 advantageously form a single dioxygen degassing volume 68.

In this case, the single dihydrogen degassing volume 66 is preferably connected to the dihydrogen collection and transportation piping 30 by a single dihydrogen outlet 74 and/or the single dioxygen degassing volume 68 is preferably connected to the dioxygen collection and transportation piping 32 by a single dioxygen outlet 76.

In the stack 24 shown in figure 3, the electrical connection system 28 electrically connects the power source 12 to each cells in series. This means that one anode 56 of one cell 26 is connected to the cathode 64 of a successive adjacent cell 26, one end anode 56 being connected to the positive terminal of the power source 12 and one end cathode 64 being connected to the negative terminal of the power source 12.

In the particular case of an alkaline electrolyzer, thanks to the grouping of two adjacent anodic compartments 36 of two successive cells 26 in alternation with the grouping of two adjacent cathodic compartments 38 of two successive cells 26, the ionic path (via the electrolyte circulation pipe/inlets) between an anode 56 and a cathode 64 which are electrically connected is longer than with traditional alternating cells arrangements. This configuration substantially reduces the parasitic reverse current during non-polarization phases of the electrodes.

In the stack 24 shown in figure 4, the electrical connection system 28 is configured to electrically connect a power source 12 to each cells. The anode 56 are connected in parallel and the cathode 64 are connected in parallel.

The parallel configuration prevents parasitic reverse currents phenomena and thus removes a non-negligible source of ageing for the electrodes.

A process for water electrolysis in a stack 24 of water electrolyzer cells 26 according to the invention will now be described.

In reference to figure 2, electrolyte 19 is provided through water inlets 44 and 45 of each electrolyzer cell 26 by the electrolyte supply system 18. The electrolyte 19 reaches the cathode chamber 38 and the anode chamber 36 and immerges the cathode 64 and the anode 56.

An electrical current is simultaneously applied between each anode 56 and a corresponding cathode 64 by the electrical connection system 28 connected the power source 12.

Water oxidation occurs at the anode 56 to produce dioxygen. The dioxygen drives at least a quantity of electrolyte 19 to form an unprocessed anodic outgoing fluid 23 comprising a mixture of dioxygen and water phase. The unprocessed anodic outgoing fluid 23 may be foamy and may have the appearance of whipped cream.

At the same time, water reduction occurs at the cathode 64 to produce dihydrogen. The dihydrogen drives at least a quantity of electrolyte 19 to form an unprocessed cathodic outgoing fluid 21 comprising a mixture of dihydrogen and water phase. The unprocessed cathodic outgoing fluid 21 may also be foamy and may also have the appearance of whipped cream.

The anodic outgoing fluid 23 rises inside the anode chamber 36 and passes though the porous separating wall 54.

The dioxygen goes through the porous separating wall 54 toward the dioxygen degassing volume 68 and forms a processed anodic outgoing fluid 23 collected at the dioxygen outlet 76.

A substantial portion of the liquid contained in the anodic outgoing fluid 23 is thus separated from the dioxygen gas, such that the processed anodic outgoing fluid 23 comprises less than 0.5 volume % liquid.

The processed anodic outgoing fluid 23 is then transported to the dioxygen collecting and processing system 22 through the dioxygen collection and transportation piping 32.

In most instances, the gas/liquid separation carried out in the electrolyzer cell 26 is sufficient to alleviate the need for a further gas/liquid separation in the dioxygen collecting and processing system 22. The dioxygen collecting and processing system 22 is without a gas/liquid separator, which decreases capital expenditures, as well as operational expenditures of the water electrolysis installation 10.

In case the separation process within the degassing cavity 52 has not fully separated water from the dioxygen in the electrolyzer cell 26, the anodic outgoing fluid 23 is processed in a subsequent gas/liquid separator of the dioxygen collecting and processing system 22. Nevertheless, since the liquid content of the dioxygen stream has been greatly reduced in the electrolyzer cell 26, the gas/liquid separator may be of a much smaller size than in traditional installations, hence reducing the capital expenditures, as well as operational expenditures of the water electrolysis installation 10. Advantageously, the remaining liquid can be removed as the same time as the residual water vapour in the gase phase using for example a chemical dryer or a liquid cooler.

The remaining water is reintroduced in the anode chamber 50 by the recirculation circuit. The recirculation circuit is in contact with a heat exchanger to control the operating temperature of the electrolyzer cell 26.

In the same way, the cathodic outgoing fluid 21 rises inside the cathode chamber 38 and goes though the porous separating wall 54. The separation process by the porous separating wall 54 is the same as the one occurring in the anode chamber 36. It will not be further described.

The dihydrogen goes through the porous separating wall 54 toward the single dihydrogen degassing volume 66 and forms the processed cathodic outgoing fluid 21 collected at the dihydrogen outlet 74.

The cathodic outgoing fluid 21 is then transported to the dihydrogen collecting and processing system 20 through the dihydrogen collection and transportation piping 30.

Just as stated before, in most instances, the gas/liquid separation carried out in the electrolyzer cell 26 is sufficient to alleviate the need for a further gas/liquid separation in the dihydrogen collecting and processing system 20. The dihydrogen collecting and processing system 20 is without a gas/liquid separator, which decreases capital expenditures, as well as operational expenditures of the water electrolysis installation 10.

In case the separation process within the degassing cavity 60 has not fully separated water from dihydrogen in the electrolyzer cell 26, the cathodic outgoing fluid 21 is processed in a subsequent gas/liquid separator of the dihydrogen collecting and processing system 22. Nevertheless, since the liquid content of the dihydrogen stream has been greatly reduced in the electrolyzer cell 26, the gas/liquid separator may be of a much smaller size than in traditional installations, hence reducing the capital as well as operational expenditures of the water electrolysis installation 10.

In an embodiment of a water electrolyzer cell according to the invention, the cathodic compartment 38 comprises a deoxidizer cavity downstream of the degassing degassing cavity 60, for example located on top of the cathodic degassing cavity 60.

After the separation of dihydrogen and water upon entry or in the cathodic degassing cavity 60, the dihydrogen stream flows through the deoxidizer cavity, the dihydrogen outlet 48 being tapped in the deoxidizer cavity.

In this case, the dihydrogen collecting and processing system 20 does not necessarily comprise a deoxidizer, or comprises a deoxidizer of reduced size compared to conventional water electrolysis installations.

Figure 5 depicts another embodiment of a water electrolyzer cell 26 according to the invention. Only the differences between the first embodiment and second embodiment will be disclosed hereafter.

As mentioned above, the cell casing 34 is without a separating wall 54.

The anodic degassing cavity 52 and/or the cathodic degassing cavity 60 comprise a porous separator substrate 62 configured to improve the separation of water and gas.

For example, the separator substrate 62 comprises a metal mesh pad as a coalescer, or/and a porous separating body such as a layer of porous particles or/and a porous self-supporting structure such as a distillation column packing.

In a variant not represented, the water electrolyzer cell 26 according to the invention comprises a separating wall 54 separating the anode chamber 50 from the anodic degassing cavity 52 and/or separating the cathode chamber 58 from the cathodic degassing cavity 60 as described above in reference to figure 2 and a porous separator substrate 62 as described above in reference to figure 5
In a variant of all previous embodiments, the cell 26 comprises a temperature control system configured to cool or heat the anodic degassing cavity 52 and/or the cathodic degassing cavity 60.

For example, the temperature control system comprises a coolant circulation system configured to circulate coolant within at least one of the degassing cavities may be provided.

In another variant, the temperature control system comprises a heater, configured to heat the porous separator substrate 62 in the anodic degassing cavity 52 and/or in the cathodic degassing cavity 60. When the porous separator substrate 62 is metallic or comprises metal elements, the heater is for example an induction heater.

When the outgoing fluids 21, 23 comprising a mixture of gas and water flows through the porous separator substrate 62, the heat breaks the mixture, in particular when the mixture is foamy. The separated water falls back respectively in the cathode chamber 58 and in the anode chamber 50.

## Claims

1. - A water electrolyzer cell (26) comprising;
- a cell casing (34) defining an anodic compartment (36) and a cathodic compartment (38), the anodic compartment (36) comprising an anode chamber (50) receiving at least an anode (56) and the cathodic compartment (38) comprising a cathode chamber (58), receiving at least a cathode (64), the cell casing (34) comprising a membrane (40) separating the anode chamber (50) from the cathode chamber (58);
- the cell casing (34) having an anode water inlet (44) tapped in the anode chamber (50) and a produced anodic gas outlet (46) emerging from the anodic compartment (36) above the anode water inlet (44),
- the cell casing (34) also having a cathode water inlet (45) tapped in the cathode chamber (58) and a produced cathodic gas outlet (48) emerging from the cathodic compartment (38) above the cathode water inlet (45),
**characterized in that** the anodic compartment (36) defines, within the cell casing (34), an anodic degassing cavity (52) located on top of the anode chamber (50), the produced anodic gas outlet (46) emerging from the anodic degassing cavity (52), the cathodic compartment (38) defining, within the cell casing (34), an cathodic degassing cavity (60) located on top of the cathode chamber (58), the produced cathodic gas outlet (48) emerging from the cathodic degassing cavity (60), the cell casing (34) comprising a partition wall (42) tightly separating the anodic degassing cavity (52) from the cathodic degassing cavity (60).

2. - The water electrolyzer cell (26) according to claim 1, wherein the volume of the anodic degassing cavity (52) is comprised between 20 % and 90 % of the volume of the anode compartment (36), the volume of the cathodic degassing cavity (60) being comprised between 20 % and 90 % of the volume of the cathode compartment (38) .

3. - The water electrolyzer cell (26) according to any one of claims 1 or 2, wherein the membrane (40) separating the anode chamber (50) from the cathode chamber (58) is an ion-exchange membrane, in particular a proton exchange membrane or an anion exchange membrane.

4. - The water electrolyzer cell (26) according to any one of the preceding claims, wherein the or each cathode (64) in the cathode chamber (38) is configured to produce a hydrogen/liquid mixture (21) during water electrolysis, the cathodic degassing cavity (60) being configured to separate hydrogen from the liquid, the or each anode in the anode chamber (50) being configured to produce an oxygen/liquid mixture (23) during water electrolysis, the anodic degassing cavity (52) being configured to separate oxygen from the liquid.

5. - The water electrolyzer cell (26) according to any one of the preceding claims, comprising a porous separation substrate (62) positioned in the anodic degassing cavity (52) and/or in the cathodic degassing cavity (60), the porous separation substrate (62) comprising at least a layer of porous particles or/and at least a porous self-supporting structure as a coalescer.

6. - The water electrolyzer cell (26) according to any one of the preceding claims, wherein the cell casing (34) comprises a porous separating wall (54) separating the anode chamber (50) from the anodic degassing cavity (52) and/or separating the cathode chamber (58) from the cathodic degassing cavity (60).

7. - The water electrolyzer cell (26) according to claim 6, wherein the porous separating wall (54) comprises a porous membrane with a thickness smaller than 500 µm.

8. - The water electrolyzer cell (26) according to claim 6, wherein the porous separating wall (54) comprises a porous plate with a thickness larger than 500 µm, the porous plate having through pores, the through pores of the porous plate being optionally filled with a coalescer, preferably with a mesh pad.

9. - The water electrolyzer cell (26) according to any one of the preceding claims, comprising a temperature control system configured to cool or heat the anodic degassing cavity (52) and/or the cathodic degassing cavity (60).

10. - The water electrolyzer cell (26) according to claim 9, taken in combination with claim 5, wherein the porous separation substrate (62) positioned in the anodic degassing cavity (52) and/or in the cathodic degassing cavity (60) comprises metal, the temperature control system being configured to heat the porous separation substrate (62) in particular via induction.

11. - The water electrolyzer cell (26) according to any one of the preceding claims, wherein the cathodic compartment (38) comprises a deoxidizer cavity positioned downstream of the cathodic degassing cavity (60).

12. - A stack (24) of water electrolyzer cells comprising a plurality of water electrolyzer cells (26) according to any one of the preceding claims, wherein the cathodic compartments (38) of two successive water electrolyzer cells (26) are positioned adjacent to one another and the anodic compartments (36) of two successive water electrolyzer cells (26) are positioned adjacent to each other.

13. - The stack (24) of water electrolyzer cells according to claim 12, wherein the adjacent cathode chambers (58) of two adjacent cathodic compartments (38) of two successive electrolyzer cells (26) form a single volume (70) containing at least two separate cathodes (64) and/or the adjacent anode chambers (50) of two adjacent anodic compartment (36) of two successive electrolyzer cells (26) form a single volume (72) containing at least two separate anodes (56).

14. - The stack (24) of water electrolyzer cells according to any one of claims 12 or 13, wherein the cathodic degassing cavities (60) of two adjacent cathodic compartments (38) of two successive electrolyzer cells (26) form a single degassing volume (66) and/or the anodic degassing cavities (52) of two adjacent anodic compartment (36) of two successive electrolyzer cells (26) form a single degassing volume (68).

15. - The stack (24) of water electrolyzer cells according to any one of claims 12 to 14, comprising an electrical connection system (28) configured to electrically connect a power source (12) to each of the cells (26),
wherein one end anode (56) of an end cell (26) being connected to the positive terminal of the power source (12) and one end cathode (64) of another end cell (26) being connected to the negative terminal of the power source (12), an anode (56) of each intermediate cell (26) between the end cells (26) being connected to a cathode (64) of an adjacent cell (26),
or wherein each anode (56) of each cell (26) is connected in parallel to the positive terminal of the power source (12) and each cathode (64) of each cell (26) is connected in parallel to the negative terminal of the power source (12).

16. - A water electrolysis process carried out in a stack (24) of water electrolyzer cells according to any one of the claims 12 to 15, the process comprising:
- introducing electrolyte (19) in the cathode chamber (58) of each cathodic compartment (38) and the anode chamber (50) of each anodic compartment (36);
- activating the power source (12) to generate water electrolysis;
- producing hydrogen by water electrolysis in the cathode chamber (58) of each cathodic compartment (38) resulting in the formation of an unprocessed cathodic outgoing fluid (21) comprising a hydrogen/liquid mixture (21) and producing oxygen by water electrolysis in the anode chamber (50) of each anodic compartment (36) resulting in the formation of an unprocessed anodic outgoing fluid containing an oxygen/liquid mixture (23);
- separating the hydrogen and liquid in the cathodic degassing cavity (60) of each cathodic compartment (38) to produce a processed cathodic outgoing fluid (21) and separating the oxygen and liquid in the anodic degassing cavity (52) of each anodic compartment (36) to produce a processed anodic outgoing fluid (23);
- evacuating the liquids by gravity in the electrode chamber of each anodic compartment (36) and cathodic compartment (38) and evacuating the processed cathodic outgoing fluid (21) and the processed anodic outgoing fluid (23) through the gas outlets (46, 48) outside of each cell casing (34).

17. - The water electrolysis process according to claim 16, wherein the processed cathodic outgoing fluid (21) separated in the cathodic degassing cavity (60) goes through a deoxidizer cavity positioned in each cathodic compartment (38) to be deoxidized before being evacuated outside of each cell casing (34).
